# FASCICULE DE BREVET EUROPEEN

(11) **EP 2 432 826 B1**
(45) Date de publication et mention de la délivrance du brevet: **25.09.2019**
(21) Numéro de dépôt: 10718613.2
(22) Date de dépôt: 12.05.2010
(51) Int. Cl.: C08K 5/00, B60C 1/00, B60C 9/00

(54) **COMPOSITION DE CAOUTCHOUC POUR PNEUMATIQUE COMPORTANT UN COMPOSE ACETYLACETONATE**
ACETYLACETONAT ENTHALTENDE KAUTSCHUKZUSAMMENSETZUNG FÜR REIFEN
RUBBER COMPOSITION FOR TIRE COMPRISING AN ACETYLACETONATE COMPOUND

(30) Priorité: 19.05.2009 FR 0902430
(43) Date de publication de la demande: 28.03.2012
(73) Titulaire: Compagnie Générale des Etablissements Michelin, 63000 Clermont-Ferrand (FR)
(72) Inventeur: MAKIUCHI, Kazumi, Yokkaichi-shi Mie 510-0957 (JP); PAGANO, Salvatore, Gunma 0373-8668 (JP)
(74) Mandataire: Regimbeau
(86) Numéro de dépôt international: PCT/EP2010/056547
(87) Numéro de publication internationale: WO 2010/133492

(56) Documents cités:
- EP-A1- 1 712 590
- JP-A- 54 047 778
- KR-A- 20010 013 425
- US-A1- 2008 132 616

## Description

### 1. DOMAINE DE L'INVENTION

Le domaine de la présente invention est celui des compositions de caoutchouc utilisables notamment pour la fabrication des articles ou produits semi-finis en caoutchouc tels que par exemple des bandages pneumatiques.

La présente invention est plus particulièrement relative aux systèmes et agents antidégradants destinés à protéger ces compositions de caoutchouc contre le vieillissement dû à l'oxydation.

### 2. ETAT DE LA TECHNIQUE

Comme on le sait, les vulcanisats de caoutchoucs diéniques essentiellement insaturés, naturels comme synthétiques, en raison de la présence de doubles liaisons sur leurs chaînes moléculaires, sont susceptibles de se détériorer plus ou moins rapidement après une exposition prolongée à l'atmosphère, s'ils ne sont pas protégés, en raison de mécanismes connus d'oxydation. Ces mécanismes complexes ont été rappelés par exemple dans les documents brevets WO 99/02590 et WO 99/06480. Ils entraînent, suite à des ruptures de ces doubles liaisons et à l'oxydation des ponts de soufre, une rigidification et une fragilisation des vulcanisats, dégradation qui est en outre accélérée sous l'action conjuguée de la chaleur par "thermo-oxydation", ou encore de celle de la lumière par "photo-oxydation".

Ces phénomènes d'oxydation ont pu être peu à peu inhibés grâce à la mise au point et commercialisation de divers agents antioxydants dont notamment des dérivés de la p-phénylènediamine ("PPD" ou "PPDA") tels que par exemple la N-isopropyl-N'-phényl-p-phénylènediamine ("I-PPD") ou N-1,3-diméthylbutyl-N'-phényl-p-phénylènediamine ("6-PPD"), des dérivés de la quinoléine ("TMQ"), à la fois excellents antioxydants et antiozonants (voir par exemple demandes de brevet WO 2004/033548, WO 2005/063510, WO 2005/133666). Ces antioxydants sont aujourd'hui utilisés de manière systématique dans les compositions de caoutchouc diénique, en particulier dans les compositions pour bandages pneumatiques, afin de combattre le vieillissement et une usure prématurée de ces derniers.

L'inconvénient bien connu de ces antioxydants est que leur concentration dans les compositions de caoutchouc diminue naturellement au cours du temps de par leur fonction chimique même, qu'ils ont en outre une forte propension naturelle à migrer des zones plus concentrées vers les zones moins concentrées en antioxydant, tant et si bien que l'homme du métier est conduit à utiliser des quantités relativement importantes de produit, ce qui est relativement coûteux et par ailleurs nuisible à l'aspect des produits finis en raison d'un fort pouvoir tachant d'un grand nombre d'agents antioxydants, notamment des dérivés de la p-phénylènediamine.

Pour pallier les inconvénients ci-dessus et ainsi améliorer encore la protection et la résistance au vieillissement des bandages pneumatiques, il a été proposé notamment d'incorporer à ces bandages des couches supplémentaires de caoutchouc, à haute concentration en antioxydant, fonctionnant en quelque sorte comme des réservoirs à antioxydant susceptibles de délivrer l'antioxydant au fil du temps, par migration, en fonction du degré d'appauvrissement des zones adjacentes (voir par exemple les documents brevet WO 2009/029114, EP 1 319 527 ou US 7 082 976),

Le brevet EP 1712 590 A divulgue des compositions de caoutchouc destinées à la préparation d'un bandage pneumatique et comprenant un élastomère diénique (caoutchouc naturel), 58 pce d'une charge renforçante, 1.5 pce d'un antioxydant et 0.1 à 3 pce d'un sel métallique d'acétyle acétonate. Le sel est préférentiellement un sel de cobalt ou de chrome.

Le brevet KR20010013425 A décrit des compositions de polychlorure de vinyle (PVC) comprenant 0.05-1 pce d'une β-dicétone et 0.01-5 pce d'un sel de calcium ou de magnésium d'acétyle acétonate, en tant que stabilisant thermique. La dicétone est utilisée pour améliorer la dispersibilité du sel de calcium ou de magnésium dans la composition de PVC.

Le brevet US 2008/0132616 A décrit des compositions de polychlorure de vinyle (PVC) comprenant un système stabilisant comprenant un antioxydant phénolique associé à un sel d'acétyle acétonate de calcium.

Le brevet JP54047778 A se réfère à des compositions de caoutchouc présentant une adhésion améliorée aux surfaces métalliques et une diminution de la détérioration par oxydation et comprenant un élastomère diénique, 50 pce de noir de carbone et 0.1-0.5 pce d'un sel d'acétyle acétonate de cobalt.

L'utilisation de tels réservoirs à antioxydant, bien qu'efficace, présente toutefois l'inconvénient de devoir modifier la structure interne des bandages pneumatiques et par conséquent de rendre notamment leur fabrication plus complexe et plus coûteuse.

Aussi, les concepteurs d'articles en caoutchouc diénique, notamment les manufacturiers de bandages pneumatiques, sont à la recherche aujourd'hui de solutions nouvelles simples qui permettent de pallier, au moins en partie, les inconvénients précités.

### 3. BREVE DESCRIPTION DE L'INVENTION

Au cours de leurs recherches, les Demanderesses ont découvert une composition de caoutchouc nouvelle qui, au cours de son vieillissement, a la particularité de consommer moins d'antioxydant et qui par conséquent permet de répondre à l'objectif ci-dessus.

En conséquence, un premier objet de l'invention concerne une composition de caoutchouc, utilisable notamment pour la fabrication d'un bandage pneumatique, comportant au moins un élastomère diénique, une charge renforçante, un système de réticulation, entre 0,2 et 10 pce d'un antioxydant et entre 0,2 et 10 pce d'un acétylacétonate de métal alcalin ou alcalino-terreux.

Grâce à la présence de l'acétylacétonate spécifique ci-dessus, on a observé de manière inattendue une réduction notable de la consommation d'antioxydant dans les compositions de caoutchouc, au cours du vieillissement de ces dernières.

La longévité des vulcanisats en caoutchouc peut être ainsi améliorée, en particulier celle des bandages pneumatiques qui peuvent être soumis de manière connue à des conditions de roulage particulièrement sévères, notamment sous atmosphère humide et corrosive.

La présente invention concerne également l'utilisation d'une composition conforme à l'invention pour la fabrication d'articles ou produits semi-finis en caoutchouc, particulièrement de bandages pneumatiques, notamment ceux destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également en soi tout article ou produit semi-fini en caoutchouc, en particulier bandage pneumatique, comportant une composition selon l'invention.

L'invention a également pour objet l'utilisation d'une composition selon l'invention pour la fabrication d'un composite métal/ caoutchouc comportant une composition de caoutchouc et au moins un renfort métallique susceptible d'adhérer à ladite composition de caoutchouc.

L'invention a également pour objet un composite métal/ caoutchouc comportant une composition de caoutchouc diénique selon l'invention et au moins un renfort métallique susceptible d'adhérer à ladite composition de caoutchouc.

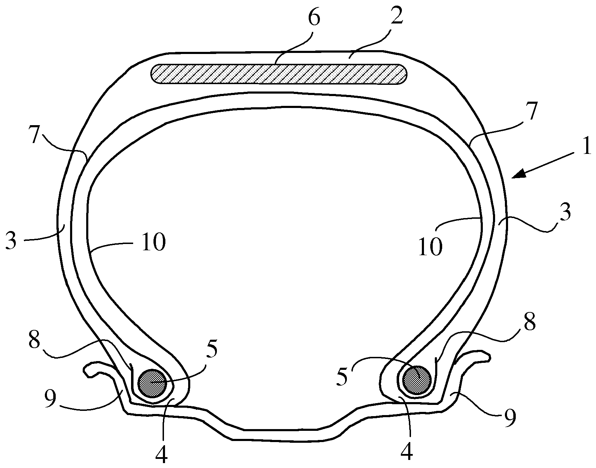

L'invention ainsi que ses avantages seront aisément compris à la lumière de la description et des exemples de réalisation qui suivent, ainsi que de la figure unique relative à ces exemples qui schématise en coupe radiale, un bandage pneumatique à armature de carcasse radiale conforme à l'invention, incorporant une composition selon l'invention.

### 4. MESURES ET TESTS UTILISES

Les compositions de caoutchouc selon l'invention sont caractérisées, avant et après cuisson, comme indiqué ci-après.

### A) Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0.83 N.m).

### B) Temps de grillage

Les mesures sont effectuées à 130°C, conformément à la norme française NF T 43-005 (1991). L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### C) Rhéométrie

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : T_{α} (par exemple T₉₅) est le temps nécessaire pour atteindre une conversion de a%, c'est-à-dire a% (par exemple 95%) de l'écart entre les couples minimum et maximum.

### D) Essais de traction

Ces essais permettent de déterminer les contraintes d'élasticité et les propriétés à la rupture. Sauf indication différente, ils sont effectués conformément à la norme française NF T 46-002 de septembre 1988. Les mesures de module ont été effectuées en traction, sauf indication expresse différente selon la norme ASTM D 412 de 1998 (éprouvette "C") ; on mesure en seconde élongation (i.e., après un cycle d'accommodation) les modules sécants vrais c'est-à-dire ramenés à la section réelle de l'éprouvette à 10%, 100% et 300% d'allongement, notés respectivement E10, E100 et E300 et exprimés en MPa (conditions normales de température et d'hygrométrie selon la norme ASTM D 1349 de 1999). On mesure également les contraintes à la rupture (en MPa) et les allongements à la rupture (en %). Toutes ces mesures de traction sont effectuées dans les conditions normales de température (23 ± 2°C) et d'hygrométrie (50 ± 5% d'humidité relative), selon la norme française NF T 40-101 (décembre 1979).

### 5. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

La composition de l'invention est une composition de caoutchouc à base (i.e., comportant le mélange ou le produit de réaction) d'au moins un élastomère diénique, une charge renforçante, un système de réticulation, entre 0,2 et 10 pce d'un antioxydant ; elle a en outre pour caractéristique nouvelle et essentielle de comporter entre 0,2 et 10 pce d'un acétyl-acétonate de métal alcalin ou alcalino-terreux.

### A) Elastomère diénique

Par élastomère (ou indistinctement caoutchouc) "diénique", on entend de manière connue un élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans les compositions conformes à l'invention :
(a)- tout homopolymère obtenu par polymérisation d'un monomère diène conjugué, ayant de préférence de 4 à 12 atomes de carbone ;
(b)- tout copolymère obtenu par copolymérisation d'un ou plusieurs diènes conjugués entre eux ou avec un ou plusieurs composés vinyle aromatique ayant de préférence de 8 à 20 atomes de carbone ;
(c)- un copolymère ternaire obtenu par copolymérisation d'éthylène, d'une α-oléfine ayant de préférence de 3 à 6 atomes de carbone avec un monomère diène non conjugué ayant de préférence de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est en premier lieu mise en oeuvre avec des élastomères diéniques essentiellement insaturés, en particulier du type (a) ou (b) ci-dessus.

Plus préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

Conviennent les polybutadiènes et en particulier ceux ayant une teneur (% molaire) en unités - 1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon norme ASTM D3418) comprise entre 0°C et - 70°C et plus particulièrement entre - 10°C et - 60°C, et/ou une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Selon un mode de réalisation particulier, l'élastomère diénique majoritaire en poids (en particulier pour plus de 50 pce) est un SBR, qu'il s'agisse d'un SBR préparé en émulsion ("ESBR") ou d'un SBR préparé en solution ("SSBR"), ou d'un coupage (mélange) SBR/BR, SBR/NR (ou SBR/IR), BR/NR (ou BR/IR), ou encore SBR/BR/NR (ou SBR/BR/IR). C'est le cas en particulier lorsque les compositions de l'invention sont destinées à constituer, dans les bandages pneumatiques, les matrices de caoutchouc de certaines bandes de roulement (par exemple pour véhicules tourisme). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique majoritaire en poids (en particulier pour plus de 50 pce) est un élastomère isoprénique. C'est le cas en particulier lorsque les compositions de l'invention sont destinées à constituer, dans les bandages pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme d'étanchéité *("inner liner")* de pneu sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode de réalisation particulier de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre - 110°C et - 80°C, plus préférentiellement entre - 105°C et - 90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

En conclusion, la composition de caoutchouc de l'invention peut contenir un seul ou plusieurs élastomères diéniques, ce dernier ou ces derniers pouvant en outre être utilisé(s) en association avec tout type d'élastomère synthétique autre que diénique, voire avec des polymères autres que des élastomères, par exemple des polymères thermoplastiques.

### B) Charge renforçante

La composition de l'invention comporte tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (en particulier de la silice ou du noir de carbone ou un mélange de silice et de noir de carbone) est compris entre 30 et 150 pce. Au-delà de 150 pce, il existe un risque d'augmentation de l'hystérèse et donc de la résistance au roulement des pneumatiques. Pour cette raison, le taux de charge renforçante totale est plus préférentiellement compris dans un domaine de 40 à 120 pce.

A titre d'exemple particulièrement préférentiel, en particulier pour un usage dans une composition de caoutchouc interne au bandage pneumatique de l'invention, on utilise de 30 à 100 pce, en particulier de 40 à 80 pce de noir de carbone, de silice, ou d'un mélange de silice et de noir de carbone.

A titre d'un autre exemple particulièrement préférentiel, en particulier pour un usage dans une composition de caoutchouc externe au bandage pneumatique de l'invention, on utilise de 40 à 150 pce, en particulier de 50 à 120 pce de noir de carbone, de silice, ou d'un mélange de silice et de noir de carbone.

Comme noirs de carbone conviennent tous les noirs de carbone, notamment les noirs du type HAF, ISAF, SAF conventionnellement utilisés dans les pneumatiques ou leurs bandes de roulement (noirs dits de grade pneumatique). Parmi ces derniers, on citera plus particulièrement les noirs de carbone des séries 100, 200, 300, 600 ou 700 (grades ASTM), comme par exemple les noirs N115, N134, N234, N326, N330, N339, N347, N375, N550, N683, N772. Les noirs de carbone pourraient être par exemple déjà incorporés à l'élastomère diénique, notamment isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche" ou parfois charge "claire" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z-A-Sₓ-A-Z,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en Ci-Cio, notamment en C₁-C₄, en particulier le propylène) ;
- les symboles Z, identiques ou différents, répondent à l'une des trois formules ci-après: 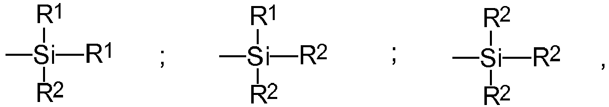
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Dans les compositions de caoutchouc de l'invention, lorsqu'elles sont renforcées par une charge inorganique telle que silice, la teneur en agent de couplage est préférentiellement comprise entre 2 et 15 pce, plus préférentiellement entre 3 et 12 pce.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

### C) Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs primaires sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés.

### D) Antioxydant

La composition de l'invention a pour caractéristique de comporter entre 0,2 et 10 pce d'un agent antioxydant, de préférence entre 0,3 et 6 pce, plus préférentiellement entre 0,5 et 4 pce d'un tel antioxydant.

L'antioxydant utilisé dans la composition de l'invention est tout antioxydant apte à retarder de manière connue le vieillissement des vulcanisats de caoutchouc attribuable à l'action de l'oxygène.

On peut citer notamment les dérivés de la para-phénylène diamine (en abrégé "PPD" ou "PPDA"), encore dénommés de manière connue para-phénylène diamines substituées, tels que par exemple la N-1,3-diméthylbutyl-N'-phényl-p-phénylène-diamine (plus connue sous le terme abrégé "6-PPD"), la N-isopropyl-N'-phényl-p-phénylènediamine (en abrégé "I-PPD"), la phényl-cyclohexyl-p-phénylène-diamine, la N,N'-di(1 ,4-diméthyl-pentyl)-p-phénylène-diamine, la N,N'-diaryl-p-phénylène diamine (DTPD), la diaryl-p-phénylène-diamine (DAPD), la 2,4,6-tris-(N-1,4-dimethylpentyl-p-phenylenediamino)-1,3,5-triazine, et les mélanges de telles diamines.

On peut également citer des dérivés de la quinoléine ("TMQ") tels que par exemple la 1,2-dihydro-2,2,4-triméthylquinoléine et la 6-éthoxy-1,2-dihydro-2,2,4- triméthyl-quinoléine.

On peut également citer des diphénylamines ou triphénylamines substituées, telles que décrites par exemple dans les demandes WO 2007/121936 et WO 2008/055683, en particulier la 4,4'-bis(isopropylamino)-triphénylamine, la 4,4'-bis(1,3-diméthylbutylamino)-triphénylamine, la 4,4'-bis(1,4-diméthylpentylamino)-triphénylamine.

On peut également citer des dialkylthiodipropionates ou encore des antioxydants phénoliques, notamment de la famille des 2,2'-méthylène-bis-[4-alkyle(C₁-C₁₀)-6-alkyle(C₁-C₁₂)phénols, tels que décrits notamment dans la demande WO 99/02590 précitée.

Bien entendu, dans la présente description, le terme antioxydant peut désigner à la fois un composé antioxydant unique ou un mélange de plusieurs composés antioxydants.

De préférence, l'antioxydant est choisi dans le groupe constitué par les p-phénylène diamines substituées, les diphénylamines substituées, les triphénylamines substituées, les dérivés de la quinoléine, et les mélanges de tels composés ; plus préférentiellement encore, l'antioxydant est choisi dans le groupe constitué par les p-phénylène diamines substituées et les mélanges de telles diamines.

### E) Acétylacétonate

Une caractéristique essentielle de la composition conforme à l'invention est qu'elle contient entre 0,2 et 10 pce d'un acétylacétonate d'un métal alcalin ou alcalino-terreux.

En dessous de 0,2 pce, l'effet technique visé risque d'être insuffisant, alors qu'au-delà de 10 pce, on s'expose à une augmentation des coûts et au risque de dégrader certaines propriétés mécaniques des compositions, à l'état initial comme après vieillissement. Pour ces différentes raisons, ledit taux de composé acétylacétonate est préférentiellement compris entre 0,3 et 6 pce, encore plus préférentiellement compris entre 0,5 et 4 pce.

On rappelle ici que le groupe des métaux alcalins est celui des éléments chimiques univalents situés dans la première colonne de la classification périodique et ne comprenant pas l'hydrogène (H) ; dans l'ordre du numéro atomique croissant, les métaux alcalins sont le lithium, le sodium, le potassium, le rubidium, le césium et le francium. Le groupe des métaux alcalino-terreux est celui des éléments chimiques du groupe 2 (ou IIa) du tableau périodique ; par ordre de numéro atomique croissant, les métaux alcalino-terreux sont le béryllium, le magnésium, le calcium, le strontium, le baryum et le radium.

De préférence, le métal de l'acétylacétonate est choisi dans le groupe constitué par Li (lithium), Na (sodium), K (potassium), Mg (magnésium), Ca (calcium) et les mélanges de tels métaux. Plus préférentiellement encore, l'acétylacétonate choisi est l'acétylacétonate de magnésium ou l'acétylacétonate de calcium.

Bien entendu, dans la présente description, le terme acétylacétonate peut désigner à la fois un composé acétylacétonate unique ou un mélange de plusieurs composés acétylacétonates.

Les acétylacétonates précédemment décrits, en particulier ceux de calcium ou de magnésium, sont bien connus et ont été essentiellement utilisés jusqu'ici comme catalyseurs de polymérisation de polymères (voir par exemple WO 95/03348 et WO 96/03455) ou encore comme stabilisants de polymères type polychlorure de vinyle ou PVC (voir par exemple demandes WO 97/40094 et WO 98/55440).

### F) Autres constituants

Les compositions de caoutchouc conformes à l'invention peuvent comporter également tout ou partie des additifs habituellement utilisés dans les compositions de caoutchouc destinées à la fabrication de bandages pneumatiques, tels que par exemple des plastifiants ou des huiles d'extension que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, les plastifiants éthers, les plastifiants esters (par exemple les trioléates de glycérol), des charges autres que celles précitées, par exemple des charges lamellaires, des résines plastifiantes hydrocarbonées présentant une haute Tg, de préférence supérieure à 30°C, telles que décrites par exemple dans les demandes WO2005/087859, WO 2006/061064 et WO 2007/017060, et les mélanges de tels composés, d'autres agents antidégradants ou agents antivieillissement tels que par exemple des antiozonants, des accélérateurs, des activateurs ou retardateurs de vulcanisation, des agents antiréversion tels que par exemple l'hexaméthylènethiosulfate de sodium ou le N,N'-m-phénylène-biscitraconimide, des accepteurs et donneurs de méthylène (par exemple résorcinol, HMT ou H3M) ou autres résines renforçantes, bismaléimides, d'autres systèmes promoteurs d'adhésion vis-à-vis de renforts métalliques notamment laitonnés, comme par exemple des sels métalliques tels que des sels organiques de cobalt ou de nickel. L'homme du métier saura ajuster la formulation de la composition en fonction de ses besoins particuliers.

Les compositions de caoutchouc de l'invention peuvent également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru. Ces agents de recouvrement sont bien connus (voir par exemple les demandes de brevet WO 2006/125533, WO 2007/017060 et WO 2007/003408), on citera par exemple des hydroxysilanes ou des silanes hydrolysables tels que des hydroxysilanes, des alkylalkoxysilanes, notamment des alkyltriéthoxysilanes comme par exemple le 1-octyl-tri-éthoxysilane, des polyols (par exemple diols ou triols), des polyéthers (par exemple des polyéthylène-glycols), des amines primaires, secondaires ou tertiaires (par exemple des trialcanol-amines), des polyorgano-siloxanes hydroxylés ou hydrolysables (par exemple des α,ω-dihydroxy-poly-organosilanes (notamment des α,ω,-dihydroxy-polydiméthylsiloxanes).

Selon un mode préférentiel de réalisation de l'invention, dans le cas notamment où la composition de l'invention est destinée à constituer une matrice de calandrage d'un renfort métallique, la composition comporte, en association avec le composé acétylacétonate précédemment décrit, au moins un composé de cobalt selon un taux préférentiel compris entre 0,1 et 10 pce, plus préférentiellement entre 0,3 et 6 pce, en particulier entre 0,5 et 4 pce. On a constaté qu'une certaine synergie pouvait exister en effet entre les deux composés, se traduisant en outre par une amélioration de la performance adhésive en conditions de vieillissement thermique et humide.

Ce composé de cobalt est préférentiellement un composé organique de cobalt, choisi plus préférentiellement dans le groupe constitué par les abiétates, acétates, acétylacétonates, benzoates, butyrates, formiates, linoléates, maléates, oléates, propionates, tallates, naphténates, résinâtes, stéarates, et les mélanges (c'est-à-dire sels, complexes, ou autres dérivés mixtes) de tels composés, en particulier parmi les abiétates, acétylacétonates, tallates, naphténates, résinates et les mélanges de tels composés. Les acétylacétonates, tallates et naphténates de cobalt sont préférés dans la majorité des cas.

Par "renfort métallique" doit être entendu ici tout élément de renforcement apte à renforcer la matrice de caoutchouc, qu'il soit entièrement métallique ou pas, dont au moins la surface ou partie externe, destinée à entrer au contact du caoutchouc, est en métal. Ce renfort peut se présenter sous différentes formes, préférentiellement sous la forme d'un fil unitaire (monofil), d'un film (par exemple un feuillard ou un ruban) ou d'un assemblage de fils, que ces fils soient tordus entre eux (par exemple, sous la forme d'un câble) ou essentiellement parallèles entre eux (par exemple sous la forme d'un paquet de fils, d'une fibre continue ou encore d'un ensemble de fibres courtes).

Dans les composites et pneumatiques de l'invention, ce renfort se présente plus préférentiellement sous la forme d'un fil unitaire ou d'un assemblage de fils, par exemple d'un câble ou d'un toron fabriqué avec des dispositifs et procédés de câblage ou toronnage connus de l'homme du métier, qui ne sont pas décrits ici pour la simplicité de l'exposé.

On utilise de préférence un renfort en acier, en particulier en acier perlitique (ou ferrito-perlitique) au carbone dénommé de manière connue "acier au carbone", ou encore en acier inoxydable tels que décrits par exemple dans les demandes de brevet EP-A-648 891 ou WO98/41682. Mais il est bien entendu possible d'utiliser d'autres aciers ou d'autres alliages. Lorsqu'un acier au carbone est utilisé, sa teneur en carbone est de préférence comprise entre 0,1% et 1,2%, notamment entre 0,5% et 1,1% (% en poids d'acier) ; elle est plus préférentiellement comprise entre 0,6% et 1,0%, une telle teneur représentant un bon compromis entre les propriétés mécaniques requises pour le pneumatique et la faisabilité des fils.

Les renforts métalliques ainsi que les sels de cobalt utilisables à titre préférentiel ont par exemple été décrits plus en détail dans la demande de brevet WO 2005/113666.

Pour améliorer encore les performances de la composition de l'invention, en particulier lorsque cette dernière constitue une matrice de calandrage d'un renfort métallique, un mode de réalisation particulier consiste à utiliser un composé bismaléimide. Ce type de composé, utilisable sans agent durcisseur, possède une cinétique de cuisson bien adaptée à celle des pneumatiques, il est susceptible d'activer la cinétique d'adhésion et d'améliorer encore, dans les compositions conformes à l'invention, l'endurance en conditions de vieillissement humide des interphases adhésives.

On rappelle que les bismaléimides répondent, de manière connue, à la formule suivante: 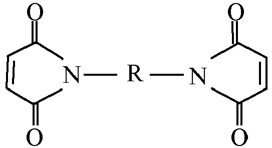 dans laquelle R est un radical hydrocarboné, aromatique ou aliphatique, cyclique ou acyclique, substitué ou non substitué, un tel radical pouvant comporter un hétéroatome choisi parmi O, N et S ; ce radical R comporte de préférence de 2 à 24 atomes de carbone.

On utilise plus préférentiellement une bismaléimide choisie dans le groupe constitué par les N,N'-éthylène-bismaléimides, N,N'-hexaméthylène-bismaléimides, N,N'-(m-phénylène)-bismaléimides, N,N'-(p-phénylène)-bismaléimides, N,N'-(p-tolylène)-bismaléimides, N,N'-(méthylènedi-p-phénylène)-bismaléimides, les N,N'-(oxydi-p-phénylène)-bismaléimides et les mélanges de ces composés. De telles bismaléimides sont bien connues de l'homme du métier.

Dans le cas où une résine renforçante ou une bismaléimide est utilisée, elle est présente dans la composition de l'invention à un taux préférentiel compris entre 0,1 et 20%, plus préférentiellement entre 1 et 8% en poids de composition de caoutchouc. Pour des taux supérieurs aux maxima indiqués, on s'expose à des risques de rigidification excessive des compositions, et donc à une fragilisation des compositions ; pour des taux inférieurs aux minima indiqués, l'effet technique visé risque d'être insuffisant.

### G) Préparation des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, phase de finition au cours de laquelle est incorporé le système de réticulation.

A titre d'exemple, la phase non-productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement du mélange ainsi obtenu, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

De préférence, l'acétylacétonate de métal alcalin ou alcalino-terreux est introduit pendant la phase non-productive, en même temps que l'antioxydant. Toutefois, l'invention s'applique également au cas où la totalité ou une fraction seulement de cet acétylacétonate est introduite pendant la phase productive.

La composition finale ainsi obtenue peut ensuite être calandrée, par exemple sous la forme d'une feuille, d'une plaque ou encore extrudée, par exemple pour former un profilé de caoutchouc utilisé pour la fabrication d'un composite ou d'un produit semi-fini, tel que par exemple des nappes, bandes, sous-couches, autres blocs de caoutchouc renforcés ou non de renforts métalliques, destinés à former par exemple une partie de la structure d'un bandage pneumatique.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions et composites de caoutchouc tant à l'état dit "cru" (i.e. avant cuisson) qu'à l'état dit "cuit" ou vulcanisé (i.e. après vulcanisation).

### 6. EXEMPLES DE REALISATION DE L'INVENTION

### A) Utilisation de la composition de l'invention dans un bandage pneumatique

La composition de caoutchouc de l'invention précédemment décrite est utilisable pour la fabrication de tout article ou produit semi-fini en caoutchouc, en particulier dans des bandages pneumatiques pour véhicules automobiles, que cette composition soit extérieure comme intérieure vis-à-vis de la structure du bandage pneumatique.

Par composition (ou mélange) "extérieure" ou "externe", on entend ici toute partie en caoutchouc du pneumatique qui donne sur l'extérieur du bandage pneumatique, en d'autres termes qui est contact de l'air ou d'un gaz de gonflage ; à titre d'exemples préférentiels, on citera notamment la bande de roulement, les flancs ou encore la couche d'étanchéité du bandage pneumatique.

Par composition (ou mélange) "intérieure" ou "interne", on entend a contrario toute partie en caoutchouc du pneumatique qui ne donne pas sur l'extérieur du bandage pneumatique, en d'autres termes qui n'est pas au contact de l'air ou d'un gaz de gonflage, qui est donc située à l'intérieur-même de la structure du pneumatique ; à titre d'exemples, on citera notamment les mélanges de calandrage présents dans la zone bourrelet, l'armature de carcasse ou l'armature de sommet du bandage pneumatique.

La composition de caoutchouc de l'invention est utilisable également pour la fabrication d'un composite métal/caoutchouc, que ce composite soit destiné ou non à être incorporé dans un bandage pneumatique. Ce composite peut se présenter sous des formes variées, par exemple sous la forme d'une nappe, d'une bande, bandelette ou d'un bloc de caoutchouc dans lesquels est incorporé le renfort métallique, ou encore d'une gaine de caoutchouc enrobant le renfort métallique, ce dernier étant au contact direct de la composition de caoutchouc. L'adhésion définitive entre le métal et la composition de caoutchouc peut être obtenue à l'issue de la cuisson de l'article fini comportant le composite ; de préférence, cette cuisson est opérée sous pression. Les composites selon l'invention sont préférentiellement destinés à des pneumatiques, en particulier à des pneumatiques radiaux pour former tout ou partie de l'armature de sommet, de l'armature de carcasse ou l'armature de la zone bourrelet de tels pneumatiques.

A titre d'exemple, la figure annexée représente de manière très schématique une coupe radiale d'un pneumatique 1 à armature de carcasse radiale conforme à l'invention, destiné par exemple à un véhicule Poids-lourd ou à un véhicule tourisme dans cette représentation générale.

Ce pneumatique 1 comporte un sommet 2, deux flancs 3, deux bourrelets 4, une armature de carcasse 7 s'étendant d'un bourrelet à l'autre. Le sommet 2, surmonté d'une bande de roulement (non représentée sur cette figure schématique, pour simplification), est de manière connue en soi renforcé par une armature de sommet 6 constituée par exemple d'au moins deux nappes sommet croisées superposées (nappes sommet dites "de travail"), recouvertes éventuellement d'au moins une nappe de protection ou une nappe sommet de frettage à zéro degré. L'armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Bien entendu, ce pneumatique 1 comporte en outre de manière connue une couche de gomme ou élastomère 10, communément appelée gomme ou couche d'étanchéité, qui définit la face radialement interne du pneumatique et qui est destinée à protéger la nappe de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renforcement (non représentée sur la figure) qui est située entre la nappe de carcasse et la couche d'étanchéité.

Le pneumatique conforme à l'invention a pour caractéristique essentielle de comporter dans sa structure au moins une composition conforme à l'invention. Cette composition, dans le cas d'une composition dite intérieure, peut être par exemple une partie de la zone bourrelet 4 comportant la tringle 5, une nappe sommet croisée ou une nappe de protection de l'armature de sommet 6, une nappe formant tout ou partie de l'armature de carcasse 7. Cette composition, dans le cas d'une composition dite extérieure, peut être présente par exemple dans la bande de roulement, dans les flancs 3 ou encore dans la couche d'étanchéité 10 du bandage pneumatique.

Selon un mode de réalisation particulier de l'invention, la composition de caoutchouc de l'invention est avantageusement utilisable comme composition de calandrage (donc comme mélange intérieur) dans les armatures de sommet 6 de tous types de bandages pneumatiques, par exemple pour véhicules Tourisme, camionnettes ou Poids-lourd. De préférence, dans un tel cas, la composition de caoutchouc de l'invention présente à l'état vulcanisé (i.e., après cuisson), un module F10 qui est supérieur à 4 MPa, plus préférentiellement compris entre 6 et 20 MPa, par exemple entre 6 et 15 MPa.

Mais elle peut aussi avoir une utilisation tout aussi avantageuse dans une armature carcasse 7 d'un bandage pneumatique pour véhicule industriel tel que Poids-lourd ; de préférence, dans un tel cas, la composition de caoutchouc de l'invention présente, à l'état vulcanisé, un module E10 qui est inférieur à 9 MPa, plus préférentiellement compris entre 4 et 9 MPa.

### B) Tests de vieillissement

Pour les besoins de cet essai, cinq compositions de caoutchouc (notée ci-après C-1 à C-5) ont été préparées dont la formulation est donnée dans le tableau 1, le taux des différents produits étant exprimés en pce (parties en poids pour cent parties d'élastomère total, constitué ici de 100 pce de NR).

La composition témoin (C-1) comporte essentiellement, en plus de l'élastomère et de la charge renforçante (noir de carbone), un antioxydant, de l'oxyde de zinc, de l'acide stéarique, du soufre et un accélérateur sulfénamide, une résine renforçante (résine phénolique plus donneur de méthylène) et un sel de cobalt à titre de promoteur d'adhésion vis-à-vis d'un renfort métallique. Ces compositions sont par exemple destinées à constituer la gomme de calandrage d'une armature de sommet d'un bandage pneumatique.

Les compositions de l'invention C-2 à C-5, toutes conformes à l'invention, se distinguent seulement par la présence additionnelle d'un acétylacétonate (respectivement de K, Na, Mg ou Ca). Les différents acétylacétonates testés ont été introduits à une concentration isomolaire en acétylacétonate, ce qui explique les différences de concentration pondérale (en pce) dans le tableau 1.

Pour la fabrication de ces compositions, on a procédé de la manière suivante: on a introduit dans un mélangeur interne, dont la température initiale de cuve était d'environ 60°C, successivement la charge renforçante (noir de carbone), l'élastomère diénique (NR), un antioxydant et le cas échéant un acétylacétonate, ainsi que les divers autres ingrédients à l'exception du système de vulcanisation ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" de 165°C. On a récupéré le mélange ainsi obtenu, on l'a refroidit puis on a incorporé du soufre et un accélérateur type sulfénamide sur un mélangeur externe (homo-finisseur) à 30°C, en mélangeant le tout (phase productive) pendant quelques minutes.

Les compositions ainsi obtenues sont ensuite soit calandrées sous la forme de plaques (épaisseur de 2 à 3 mm) pour la mesure de leurs propriétés physiques ou mécaniques d'une part, pour la conduite des tests de vieillissement d'autre part.

Les propriétés mécaniques de ces compositions ont été reportées dans le tableau 2 annexé. On note que toutes ces compositions ont des propriétés quasiment équivalentes, mis à part un allongement à la rupture avantageusement supérieur en présence des deux acétylacétonates préférentiels de Mg ou de Ca (compositions C-4 et C-5).

Après cuisson des compositions (25 min à 150°C), les blocs de caoutchouc sont placés dans une étuve à une température de 55°C, sous une humidité relative de 60%, pendant une à plusieurs semaines, ceci afin de comparer les cinétiques de réduction du taux d'antioxydant des compositions au cours de ce vieillissement accéléré. Le taux d'antioxydant a été mesuré par une technique connue de HPLC (chromatographie liquide à haute performance), d'une part à l'état initial sur les éprouvettes non vieillies, c'est-à-dire directement en sortie de cuisson, et d'autre part après vieillissement de une à huit semaines.

Les résultats obtenus sont reportés dans le tableau 3 annexé. Le taux d'antioxydant dans les compositions est exprimé en unités relatives, la base 100 étant retenue pour la composition témoin à l'état initial (i.e., après sortie de cuisson).

A la lecture de ce tableau 3, on constate tout d'abord que, de manière inattendue, la présence d'un acétylacétonate de métal alcalin ou alcalino-terreux permet déjà, immédiatement après cuisson (état initial), de réduire de manière sensible (environ 7%) la perte d'antioxydant présent dans les compositions, ceci quel que soit l'acétylacétonate testé.

En outre, après vieillissement thermique accéléré, on note que quels que soient la durée du vieillissement et l'acétylacétonate testé, la présence de l'acétylacétonate de métal alcalin ou alcalino-terreux permet de réduire notablement la consommation d'antioxydant au cours du temps, comparativement à la composition témoin. De ce point de vue, les meilleurs résultats sont obtenus avec les acétylacétonates de magnésium et de calcium.

En conclusion, les tests de vieillissement thermique ci-dessus démontrent clairement que l'ajout d'un acétylacétonate de métal alcalin ou alcalino-terreux, fonctionnant de ce fait comme un agent antidégradant, permet de réduire de manière sensible la consommation d'antioxydant dans les compositions de caoutchouc, offrant ainsi aux vulcanisats et donc également aux bandages pneumatiques les comportant, une longévité potentiellement améliorée en raison d'une meilleure protection contre le vieillissement dû à l'oxydation.

**Tableau 1**

| Formulation des compositions de caoutchouc (en pce) : | C-1 | C-2 | C-3 | C-4 | C-5 |
|---|---|---|---|---|---|
| élastomère diénique (1) | 100 | 100 | 100 | 100 | 100 |
| noir de carbone (2) | 55 | 55 | 55 | 55 | 55 |
| antioxydant (3) | 2.3 | 2.3 | 2.3 | 2.3 | 2.3 |
| oxyde de zinc | 8 | 8 | 8 | 8 | 8 |
| acide stéarique | 0.2 | 0.2 | 0.2 | 0.2 | 0.2 |
| accepteur de méthylène (4) | 0.7 | 0.7 | 0.7 | 0.7 | 0.7 |
| donneur de méthylène (5) | 2.0 | 2.0 | 2.0 | 2.0 | 2.0 |
| composé de cobalt (6) | 1.8 | 1.8 | 1.8 | 1.8 | 1.8 |
| acétylacétonate de K (7) | - | 2.0 | - | - | - |
| acétylacétonate de Na (8) | - | - | 1.7 | - | - |
| acétylacétonate de Mg (9) | - | - | - | 1.7 | - |
| acétylacétonate de Ca (10) | - | - | - | - | 1.6 |
| agent anti-réversion (11) | 1.8 | 1.8 | 1.8 | 1.8 | 1.8 |
| soufre | 5 | 5 | 5 | 5 | 5 |
| accélérateur sulfénamide (12) | 0.7 | 0.7 | 0.7 | 0.7 | 0.7 |

(1) caoutchouc naturel ;
(2) N326 (dénomination selon norme ASTM D-1765) ;
(3) N-(1,3-diméthylbutyl)-N'-phényl-p-phénylènediamine ;
   ("Santoflex 6PPD" de la société Flexsys);
(4) résorcinol (société Sumitomo);
(5) HMT (hexaméthylènetétramine - société Degussa);
(6) naphténate de cobalt (Aldrich - No. produit 544574) ;
(7) acétylacétonate de K (Alfa-Aesar - No. produit B24165) ;
(8) acétylacétonate de Na (Alfa-Aesar - No. produit B24009) ;
(9) acétylacétonate de Mg (Alfa-Aesar - No. produit 12532) ;
(10) acétylacétonate de Ca (Alfa-Aesar - No. produit 30526) ;
(11) hexaméthylènethiosulfate de sodium ("Duralink HTS" de la société Flexsys) ;
(12) N-ter-butyl-2-benzothiazyle sulfénamide
   ("Santocure TBBS" de la société Flexsys).

**Tableau 2**

| Composition N°: | C-1 | C-2 | C-3 | C-4 | C-5 |
|---|---|---|---|---|---|
| *Propriétés avant cuisson:* | | | | | |
| Mooney (UM) | 72 | 72 | 70 | 67 | 73 |
| T5 (min) | 8 | 3 | 4 | 5 | 4 |
| T₉₅ (min) | 12 | 14 | 12 | 11 | 11 |
| | | | | | |

| *Propriétés après cuisson:* | | | | | |
|---|---|---|---|---|---|
| E10 (MPa) | 7.4 | 8.4 | 8.5 | 7.7 | 8.1 |
| E100 (MPa) | 1.8 | 1.8 | 1.8 | 1.6 | 1.7 |
| E300 (MPa) | 0.9 | 0.8 | 0.8 | 0.7 | 0.8 |
| contrainte à la rupture (MPa) | 27 | 26 | 26 | 26 | 26 |
| allongement à la rupture (%) | 360 | 360 | 360 | 400 | 400 |

**Tableau 3**

| % en poids d'antioxydant dans la composition de caoutchouc (en unités relatives) | C-1 | C-2 | C-3 | C-4 | C-5 |
|---|---|---|---|---|---|
| Etat initial (après cuisson) | 100 | 107 | 107 | 107 | 107 |
| Après vieillissement 1 semaine | 75 | 85 | 86 | 88 | 89 |
| Après vieillissement 2 semaines | 63 | 71 | 73 | 77 | 77 |
| Après vieillissement 4 semaines | 42 | 45 | 47 | 55 | 55 |
| Après vieillissement 8 semaines | 32 | 34 | 35 | 43 | 44 |

## Revendications

1. Composition de caoutchouc, utilisable notamment pour la fabrication d'un bandage pneumatique, comportant au moins un élastomère diénique, une charge renforçante, un système de réticulation, entre 0,2 et 10 pce d'un antioxydant et entre 0,2 et 10 pce d'un acétylacétonate de métal alcalin ou alcalino-terreux.

2. Composition selon la revendication 1, l'élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

3. Composition selon la revendication 1 ou 2, la charge renforçante étant choisie dans le groupe constitué par le noir de carbone, les charges inorganiques et les mélanges de telles charges.

4. Composition selon la revendication 3, la charge renforçante étant choisie dans le groupe constitué par le noir de carbone, la silice et les mélanges de telles charges.

5. Composition selon l'une quelconque des revendications 1 à 4, le taux de charge renforçante étant compris entre 30 et 150 pce.

6. Composition selon l'une quelconque des revendications 1 à 5, le système de réticulation étant à base de soufre et d'un accélérateur.

7. Composition selon l'une quelconque des revendications 1 à 6, le métal de l'acétylacétonate étant choisi dans le groupe constitué par le lithium, le sodium, le potassium, le calcium, le magnésium et les mélanges de ces composés.

8. Composition selon la revendication 7, l'acétylacétonate étant l'acétylacétonate de magnésium ou l'acétylacétonate de calcium.

9. Composition selon l'une quelconque des revendications 1 à 8, le taux d'acétylacétonate étant compris entre 0,3 et 6 pce, de préférence entre 0,5 et 4 pce.

10. Composition selon l'une quelconque des revendications 1 à 9, comportant en outre un sel de cobalt.
PCT/EP201 0/056547

11. Composition selon la revendication 10, le sel de cobalt étant choisi dans le groupe constitué par les abiétates, les acétylacétonates, les tallates, les naphténates, les résinâtes et les mélanges de ces composés.

12. Composition selon l'une quelconque des revendications 1 à 11, l'antioxydant étant choisi dans le groupe constitué par les p-phénylène diamines substituées, les diphénylamines substituées, les triphénylamines substituées, les dérivés de la quinoléine, et les mélanges de tels composés.

13. Composition selon la revendication 12, l'antioxydant étant choisi dans le groupe constitué par les p-phénylène diamines substituées et les mélanges de telles diamines.

14. Bandage pneumatique comportant une composition selon l'une quelconque des revendications 1 à 13.

15. Composite métal/ caoutchouc comportant une composition de caoutchouc selon l'une quelconque des revendications 1 à 13 et au moins un renfort métallique.

## Patentansprüche

1. Kautschukzusammensetzung, die insbesondere für die Herstellung eines pneumatischen Bands verwendbar ist, umfassend wenigstens ein Dienelastomer, eine Verstärkungscharge, ein Vernetzungssystem, zwischen 0,2 und 10 phe eines Antioxydans und zwischen 0,2 und 10 phe eines Acetylacetonats aus alkalischem oder Erdalkali-Metall.

2. Zusammensetzung gemäß Anspruch 1, wobei das Dienelastomer aus der Gruppe ausgewählt ist, bestehend aus Polybutadienen, Naturkautschuk, synthetischen Polyisoprenen, Butadien-Kopolymeren, Isopren-Kopolymeren und den Mischungen dieser Elastomere.

3. Zusammensetzung gemäß Anspruch 1 oder 2, wobei die Verstärkungscharge aus der Gruppe ausgewählt ist, die durch Ruß, anorganische Chargen und Mischungen derartiger Chargen gebildet ist.

4. Zusammensetzung gemäß Anspruch 3, wobei die Verstärkungscharge aus der Gruppe ausgewählt ist, bestehend aus Ruß, Kieselsäureanhydrid und Mischungen derartiger Chargen.

5. Zusammensetzung gemäß irgendeinem der Ansprüche 1 bis 4, wobei der Gehalt der Verstärkungscharge zwischen 30 und 150 phe inbegriffen ist.

6. Zusammensetzung gemäß irgendeinem der Ansprüche 1 bis 5, wobei das Vernetzungssystem auf Schwefel und einem Beschleuniger basiert.

7. Zusammensetzung gemäß irgendeinem der Ansprüche 1 bis 6, wobei das Acetylacetonat-Metall aus der Gruppe ausgewählt ist, bestehend aus Lithium, Natrium, Kalium, Kalzium, Magnesium und den Mischungen dieser Verbindungen.

8. Zusammensetzung gemäß Anspruch 7, wobei das Acetylacetonat Magnesium-Acetylacetonat oder Kalzium-Acetylacetonat ist.

9. Zusammensetzung gemäß irgendeinem der Ansprüche 1 bis 8, wobei der Acetylacetonat-Gehalt zwischen 0,3 und 6 phe, bevorzugt zwischen 0,5 und 4 phe inbegriffen ist.

10. Zusammensetzung gemäß irgendeinem der Ansprüche 1 bis 9, umfassend darüber hinaus ein Kobaltsalz.

11. Zusammensetzung gemäß Anspruch 10, wobei das Kobaltsalz aus der Gruppe ausgewählt ist, bestehend aus Abietaten, Acetylacetonaten, Tallaten, Naphtenaten, Resinaten und den Mischungen dieser Verbindungen.

12. Zusammensetzung gemäß irgendeinem der Ansprüche 1 bis 11, wobei das Antioxidans aus der Gruppe ausgewählt ist, bestehend aus substituierten p-Phenylendiaminen, substituierten Diphenylaminen, substituierten Triphenylaminen, den Derivaten von Chinolin und den Mischungen derartiger Verbindungen.

13. Zusammensetzung gemäß Anspruch 12, wobei das Antioxidans aus der Gruppe ausgewählt ist, bestehend aus substituierten p-Phenyldiaminen und den Mischungen derartiger Diamine.

14. Pneumatische Bandage, umfassend eine Zusammensetzung gemäß irgendeinem der Ansprüche 1 bis 13.

15. Metall- / Kautschuk-Verbundwerkstoff, umfassend eine Kautschuk-Zusammensetzung gemäß irgendeinem der Ansprüche 1 bis 13 und wenigstens eine Metallverstärkung.

## Claims

1. A rubber composition, usable in particular for manufacturing a pneumatic tyre, including at least one diene elastomer, a reinforcing filler, a crosslinking system, between 0.2 and 10 phr (parts per hundred of rubber) of an antioxidant and between 0.2 and 10 phr of an alkaline or alkaline earth metal acetylacetonate.

2. The composition according to claim 1, the diene elastomer being chosen from the group consisting of polybutadienes, natural rubber, synthetic polyisoprenes, butadiene copolymers, isoprene copolymers and mixtures of these elastomers.

3. The composition according to claim 1 or 2, the reinforcing filler being chosen from the group consisting of carbon black, inorganic fillers and mixtures of such fillers.

4. The composition according to claim 3, the reinforcing filler being chosen from the group consisting of carbon black, silica and mixtures of such fillers.

5. The composition according to any of claims 1 to 4, the reinforcing filler rate being between 30 and 150 phr.

6. The composition according to any of claims 1 to 5, the crosslinking system being based on sulphur and an accelerator.

7. The composition according to any of claims 1 to 6, the acetylacetonate metal being chosen from the group consisting of lithium, sodium, potassium, calcium, magnesium and mixtures of these compounds.

8. The composition according to claim 7, the acetylacetonate being magnesium acetylacetonate or calcium acetylacetonate.

9. The composition according to any of claims 1 to 8, the acetylacetonate rate being between 0.3 and 6 phr, preferably between 0.5 and 4 phr.

10. The composition according to any of claims 1 to 9, further including a cobalt salt.

11. The composition according to claim 10, the cobalt salt being chosen from the group consisting of abietates, acetylacetonates, tallates, naphthenates, resinates and mixtures of these compounds.

12. The composition according to any of claims 1 to 11, the antioxidant being chosen from the group consisting of substituted p-phenylene diamines, substituted diphenylamines, substituted triphenylamines, quinoline derivatives, and mixtures of such compounds.

13. The composition according to claim 12, the antioxidant being chosen from the group consisting of substituted p-phenylene diamines and mixtures of such diamines.

14. A pneumatic tyre including a composition according to any of claims 1 to 13.

15. A metal/rubber composite including a rubber composition according to any of claims 1 to 13 and at least one metal reinforcement.
